Europäisches Patentamt

European Patent Office

Office européen des brevets

(19)

(11) **EP 0 723 027 B1**

(12) **EUROPÄISCHE PATENTSCHRIFT**

(45) Veröffentlichungstag und Bekanntmachung des Hinweises auf die Patenterteilung:
**15.09.1999 Patentblatt 1999/37**

(51) Int Cl.⁶: **C21D 9/60**, C21D 1/42
// H05B6/02

(21) Anmeldenummer: **96100795.2**

(22) Anmeldetag: **19.01.1996**

(54) **Anordnung zum Erwärmen von Stäben und Draht mit Abschnitten periodisch sich verändernder Durchmesser im Durchlauf durch Induktionsspulen**

Device for heating rods or wires with periodically changing diameters while passing through induction coils

Dispositif pour le chauffage de fils et de barres ayant des sections à diamètres périodiquement variables, en marche continu à travers un inducteur

(84) Benannte Vertragsstaaten:
**BE DE FR NL SE**

(30) Priorität: **21.01.1995 DE 19501793**

(43) Veröffentlichungstag der Anmeldung:
**24.07.1996 Patentblatt 1996/30**

(73) Patentinhaber: **Bredtmann-Girke Industrieofenbau GmbH
45663 Recklinghausen (DE)**

(72) Erfinder: **Emig, Axel, Dipl.-Ing.
DE-66914 Waldmohr (DE)**

(74) Vertreter: **Vièl, Christof, Dipl.-Ing.
Patentanwälte VIEL & VIEL,
Postfach 65 04 03
66143 Saarbrücken (DE)**

(56) Entgegenhaltungen:
EP-A- 0 097 408          FR-A- 2 242 469
FR-A- 2 418 601          FR-A- 2 498 407

- PATENT ABSTRACTS OF JAPAN vol. 016, no. 581 (C-1012), 21.Dezember 1992 & JP-A-04 232210 (HONDA MOTOR CO LTD), 20.August 1992,

**Beschreibung**

Die Erfindung betrifft eine Anordnung zum Erwärmen von Stäben und Draht im Durchlauf durch Induktionsspulen, wobei die Stäbe und der Draht aus bikonischen Sequenzen der Länge L bestehen, wobei eine bikonische Sequenz einen zentralen, zylindrischen Abschnitt aufweist, an den sich beidseitig ein oder mehrere gleichartige oder ungleichartige konische oder anders geformte Übergänge anschließen, die sich in abschließenden zylindrischen Abschnitten fortsetzen, und die zylindrischen Abschnitte unterschiedliche Durchmesser aufweisen.

Die Induktionserwärmung weist gegenüber anderen Wärmeverfahren, wie beispielsweise der Erwärmung in Strahlungsöfen, in Blei- und Salzbädern oder mit einer Brennerflamme, eine Reihe von Vorteilen auf, die wegen der hohen Leistungsübertragung und damit raschen Erwärmung sich in einer kaum nennenswerten Verzunderung, Entkohlung und Grobkornbildung niederschlagen. Aufgrund dieser Vorteile, der Wirtschaftlichkeit und dem hohen Automatisierungsgrad wird die Induktionserwärmung in großem Umfang beim Erwärmen von Stahlstäben und -draht mit konstantem Durchmesser für die Herstellung von Schraubenfedern, Torsionsstäben und dergleichen aus Federstahl praktiziert. Die Stäbe oder der Draht durchlaufen mit konstanter Geschwindigkeit eine üblicherweise zylindrische Induktionsspule, die, abhängig vom Werkstoffdurchmesser und der gewünschten Temperaturänderung, mit Mittel- oder Hochfrequenz konstanter Generatorleistung erregt wird.

Es ist jedoch nicht möglich, Stäbe oder Draht mit Abschnitten unterschiedlicher Durchmesser gleichmäßig induktiv im Durchlauf in derartigen Anlagen zu erwärmen: Die Abschnitte kleinerer Durchmesser werden dabei wesentlich stärker erwärmt als die Abschnitte größerer Durchmesser, so daß sich ein ungleichmäßiges Temperaturprofil über die Länge der erwärmten Stäbe bzw. des Drahtes einstellt und die Gefahr der Oberflächenüberhitzung sehr groß ist. Solche Stäbe und Drähte mit bikonischen Sequenzen werden zur Herstellung sogenannter Miniblockfedern verwendet und stellen heute einen beträchtlichen Anteil der Federnfertigung. Derzeit werden diese Stäbe und Drähte in Strahlungsöfen oder Salz- bzw. Bleibädern erwärmt mit den daraus sich ergebenden, bekannten Nachteilen.

Der Erfindung liegt deshalb die Aufgabe zugrunde, eine Anordnung zu schaffen, in der eine gleichmäßige, den Anforderungen entsprechende Erwärmung von Stäben und Draht mit Abschnitten periodisch sich verändernder Durchmesser im Durchlauf induktiv möglich ist.

Diese Aufgabe wird erfindungsgemäß dadurch gelöst, daß zwei Induktionsspulen (5) im Abstand L, der der Länge einer bikonischen Sequenz (4) entspricht, hintereinander angeordnet und von einer gemeisamen Stromquelle gespeist sind, und daß die Länge $l$ der Induktionsspulen (5) gleich der Summe der Länge $l_1$ des zylindrischen Abschnittes (1) mit dem kleineren Durchmesser ($d_1$) und etwa der Hälfte der Länge $l_2$ des nächstliegenden, angrenzenden Überganges (2) ist.

$$l \approx l_1 + 1/2 \times l_2.$$

Vorteilhaft ist es, daß mehr als zwei Induktionsspulen hintereinander mit Abstand L angeordnet sind.

Eine Ausbildung der Erfindung ist dadurch gekennzeichnet, daß die Induktionsspulen elektrisch in Reihe geschaltet sind und ein Generator zum Speisen der Induktionsspulen vorgesehen ist.

Eine andere Ausbildung der Erfindung besteht darin, daß die Induktionsspulen elektrisch parallel geschaltet sind und ein Generator zum Speisen der Induktionsspulen vorgesehen ist.

Im Rahmen der Erfindung liegt es, daß zur Ansteuerung des Generators ein Rechner vorgesehen ist, der die Generatorleistung W in Abhängigkeit von dem in den Induktionsspulen befindlichen Stab- oder Drahtdurchmesser d und der Durchlaufgeschwindigkeit v steuert.

Nach der Erfindung ist es auch möglich, daß zur Ansteuerung des Generators ein Rechner vorgesehen ist, der die Generatorleistung W in Abhängigkeit von der Einzugslänge x und der Durchlaufgeschwindigkeit v steuert.

Weiterhin ist es erfindungsgemäß, daß eine bikonische Sequenz einen zentralen, zylindrischen Abschnitt mit einem größeren Durchmesser $d_3$ aufweist, an den sich nach beiden Seiten meist konisch geformte Übergänge anschließen, die sich in zylindrischen Abschnitten mit gleichem Durchmesser $d_1$, der kleiner ist als der Durchmesser $d_3$ des zentralen Abschnittes, fortsetzen.

Erfindungsgemäß ist es auch, daß der Übergang vom Abschnitt mit dem größeren Durchmesser $d_3$ zum Abschnitt mit dem Durchmesser $d_1$ in mehreren Stufen vorgesehen ist.

Die mit der Erfindung erzielten Vorteile bestehen insbesondere darin, daß den Stab- bzw. Drahtabschnitten mit kleinerem Durchmesser gezielt weniger Energie zugeführt wird als den Abschnitten mit größerem Durchmesser, wobei die zugeführte Energie durch Steuerung der Generatorleistung gezielt verändert wird. Dadurch wird eine gleichmäßige Erwärmung über die gesamte Länge der Stäbe oder Drähte erreicht und außerdem erfolgt zwischen den einzelnen Induktionsspulen ein Temperaturausgleich zwischen Oberfläche und Kern des Werkstoffes, was einer lokalen Oberflächenüberhitzung entgegenwirkt und eine gleichmäßigere Erwärmung über den Querschnitt fördert.

Ausführungsbeispiele der Erfindung sind in der Zeichnung dargestellt und werden nachfolgend näher beschrieben. Es zeigen

Fig. 1 die Kontur einer bikonischen Sequenz,

Fig. 2 eine schematische Darstellung einer erfindungsgemäßen Anordnung mit drei in Reihe geschalteten Induktionsspulen,

Fig. 3 schematische Darstellung des Verlaufes der Generatorleistung in Abhängigkeit von dem Stab- bzw. Drahtdurchmesser,

Fig. 4 ein Blockschaltbild bei Steuerung der Generatorleistung in Abhängigkeit vom Stabbzw. Drahtdurchmesser,

Fig. 5 ein Blockschaltbild bei Steuerung der Generatorleistung in Abhängigkeit von der Einzugslänge und

Fig. 6 die Kontur einer anderen bikonischen Sequenz.

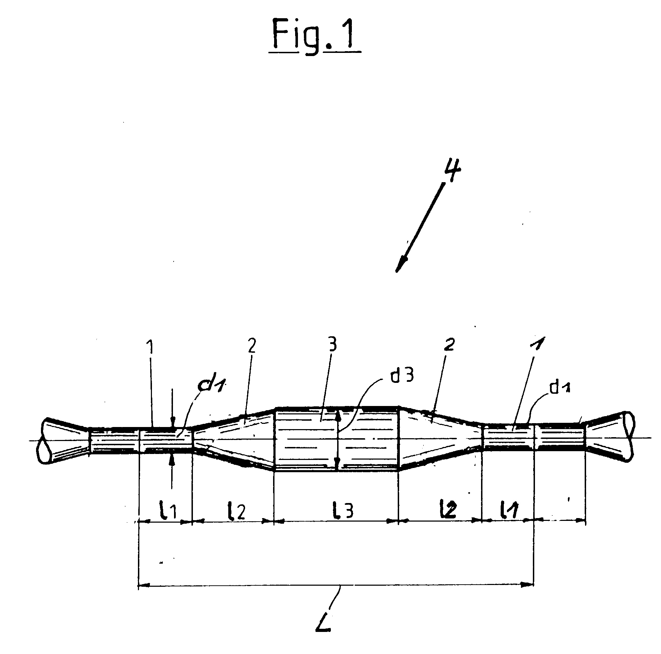

Fig. 1 zeigt die Kontur einer bikonischen Sequenz 4. Die bikonische Sequenz 4 besteht aus einem zentralen, zylindrischen Abschnitt 3 mit dem zugehörigen Drahtdurchmesser $d_3$ und der Länge $l_3$, an dem sich beidseitig konisch ausgebildete Übergänge 2 der Längen $l_2$ anschließen. Der Durchmesser $d_3$ des zentralen Abschnittes 3 reduziert sich im Verlauf der Übergänge 2 auf den Durchmesser $d_1$ der angrenzenden zylindrischen Abschnitte 1 der Länge $l_1$.

Die Abschnitte 1 können unterschiedliche Längen und Durchmesser aufweisen, ebenso können die Übergänge 2 verschieden lang sein und zudem in Segmente mit unterschiedlicher Konizität und / oder ballig oder anders geformt ausgebildet sein.

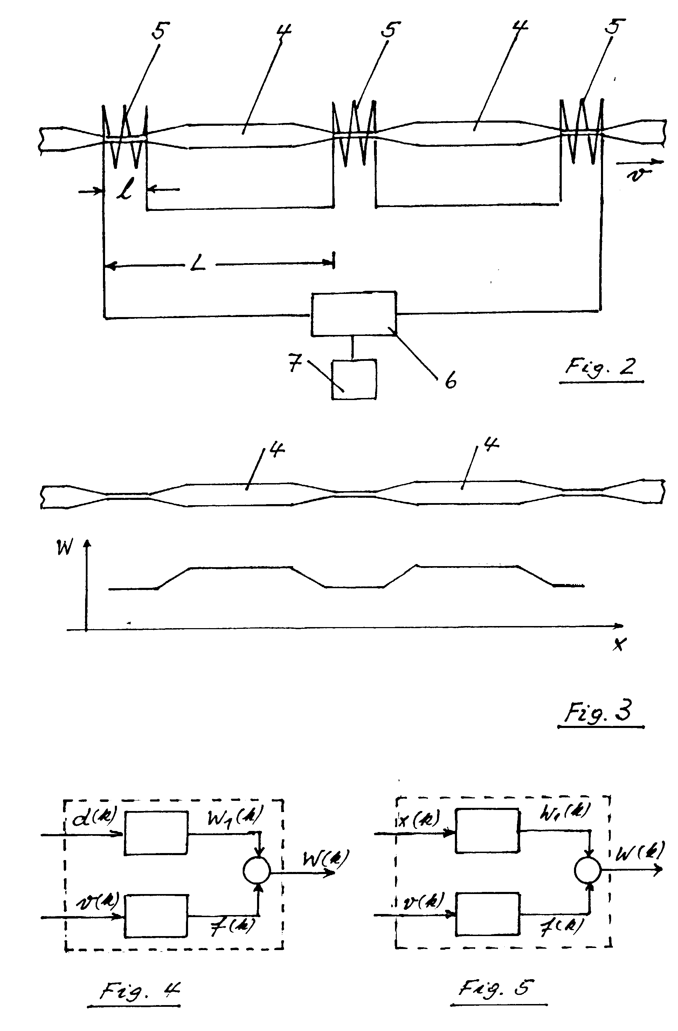

Fig. 2 zeigt eine schematische Darstellung einer erfindungsgemäßen Anordnung zum gleichmäßigen Erwärmen von Stäben und Drähten in Induktionsspulen 5, wobei die Stäbe und Drähte sich aus einer Aneinanderreihung von bikonischen Sequenzen 4 der Länge L gemäß Fig. 1 zusammensetzen. Aus der Geometrie jeder Sequenz 4 ergibt sich bei der Aneinanderfolge der Sequenzen 4 das im Abstand $L_n = n \times L$ mit n = 1, 2, 3 .... immer wieder der gleiche Stab- oder Drahtdurchmesser d vorliegt. Die Stäbe bzw. der Draht durchlaufen in dem in Fig. 2 dargestellten Ausführungsbeispiel der Erfindung drei hintereinander angeordnete, in Reihe geschaltete Induktionsspulen 5, die von einem mittels Rechner 7 gesteuerten Generator 6 gespeist werden. Die Induktionsspulen 5 sind so angeordnet, daß ihr Abstand erfindungsgemäß gerade der Länge L einer bikonischen Sequenz 4 entspricht, wie in Fig. 2 eingezeichnet ist. Diese Anordnung der Induktionsspulen 5 bewirkt, daß beim Durchlauf der Stäbe bzw. des Drahtes sich in jeder Induktionsspule 5 Stab- oder Drahtabschnitte mit den gleichen Abmessungen befinden. Dadurch wird es erfindungsgemäß möglich, jedem Stab- bzw. Drahtabschnitt entsprechend seinem jeweiligen Durchmesser d die Energie durch Steuerung der Generatorleistung gezielt zuzuführen, die für eine gleichmäßige Erwärmung des Werkstoffes im Durchlauf notwendig ist. Das bedeutet, daß in den Abschnitten 1 mit dem kleineren Durchmesser $d_1$ weniger Energie zugeführt wird, als den Abschnitten 3 mit dem größeren

Durchmesser $d_3$.

In die Überlegungen zur Festlegung der optimalen Länge 1 der Induktionsspulen 5 sind zwei an sich gegensätzliche Vorgaben einbezogen:

1. Die Induktionsspulen 5 sollen möglichst lang sein, damit die notwendige Energie auch bei großen Durchlaufgeschwindigkeiten v auf den Werkstoff übertragen werden,

2. die Induktionsspulen sollen möglichst kurz sein, damit sich in jeder Induktionsspule 5 nur Stab- bzw. Drahtabschnitte mit konstantem Durchmesser d befinden.

Unter Berücksichtigung dieser Vorgaben hat sich in der Praxis eine Länge der Induktionsspulen 5 von $1 \approx l_1 + 1/2 \times l_2$ als sehr vorteilhaft erwiesen, wobei $l_1$ die Länge des Abschnittes 1 mit dem kleineren Durchmesser $d_1$ und $l_2$ die Länge des Überganges 2 einer bikonischen Sequenz 4 sind.

Fig. 3 zeigt schematisch den Verlauf einer in Abhängigkeit von den Abmessungen einer bikonischen Sequenz 4 gesteuerten Generatorleistung W. Zwischen Anfang und Ende der bikonischen Sequenz 4 wird die Generatorleistung W gemäß einer Rampe verändert.

Zur Aussteuerung des Generators 6 wird ein Rechner 7 benutzt. Mit Hilfe des Rechners 7 läßt sich die Generatorleistung W einmal in Abhängigkeit von dem Stab- bzw. Drahtdurchmesser d, der sich gerade in den Induktionsspulen 5 befindet, und der Durchlaufgeschwindigkeit v steuern; eine zweite Möglichkeit besteht in der Ansteuerung des Generators 6 in Abhängigkeit von der Einzugslänge x und der Durchlaufgeschwindigkeit v, wobei die Einzugslänge x angibt, welcher Stab- bzw. Drahtabschnitt sich gerade in den Induktionsspulen 5 befindet. - Die Änderung bzw. Anpassung der abgegebenen Generatorleistung ist auch durch Variieren der Generatorspannung bzw. des -stromes möglich.

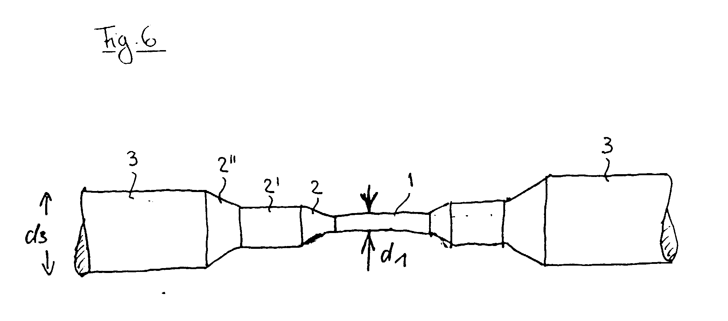

Die Fig. 4 und 5 zeigen Blockschaltbilder für die Steuerung der Generatorleistung W (k) zum Zeitpunkt k in Abhängigkeit von dem Stab- bzw. Drahtdurchmesser d (k) (Fig. 4) und in Abhängigkeit von der Einzugslänge x (k) des Stabes bzw. des Drahtes ebenfalls zum Zeitpunkt k (Fig. 5). Bei der Ansteuerung des Generators 6 in Abhängigkeit vom Stab- bzw. Drahtdurchmesser d ist es nicht erforderlich, den Durchmesser direkt zu messen. Aus der Kenntnis der Drahteinzugslänge x, der Geometrie des Stabes bzw. Drahtes und der Anordnung der Induktionsspulen 5 kann der jeweilige Stab- bzw. Drahtdurchmesser d errechnet werden. Der Stab- bzw. Drahtdurchmesser d(k) und die Drahtdurchlaufgeschwindigkeit v(k) zum Zeitpunkt k werden in den Rechner 7 eingegeben. Dem Durchmesser d(k) zugeordnet sind Generatorleistungen $W_1$(k), aus denen mit Hilfe eines Korrekturfaktors f(k) der die aktuelle Durchlaufgeschwindigkeit v(k) berücksichtigt, die an die Durchlaufgeschwindigkeit v(k) angepaßte Generatorleistung W(k) zum Zeitpunkt k ermittelt wird (Fig. 4). Bei der Steuerung der Generatorleistung W(k) in Abhängigkeit von der Einzugslänge x(k) werden die Einzugslänge x(k) und die Durchlaufgeschwindigkeit v(k) zum Zeitpunkt k in den Rechner 7 eingegeben. Aus der der Einzugslänge x(k) zugeordneten Generatorleistung $W_1(k)$ wird mit Hilfe eines Korrekturfaktors f(k) wie in dem vorangegangenen Beispiel die an die Durchlaufgeschwindigkeit v(k) angepaßte Generatorleistung W(k) zum Zeitpunkt k ermittelt (Fig. 5).

Neben dem in Fig. 2 dargestellten Ausführungsbeispiel ist es nach der Erfindung auch möglich, mehr als drei Induktionsspulen 5 hintereinander anzuordnen und in Reihe geschaltet von einem Generator 6 zu speisen. Die Möglichkeit, die erfindungsgemäße Anordnung nur mit einem Generator 6 auszustatten, ist nicht unerheblich für die Wirtschaftlichkeit der erfindungsgemäßen Anordnung.

Eine andere Ausbildung der Erfindung, die nicht in der Zeichnung dargestellt ist, kann darin bestehen, daß die Induktionsspulen 5 nicht in Reihe sondern parallel geschaltet sind und ebenfalls von einem Generator 6 gespeist werden. Die Anzahl der Induktionsspulen 5 ist dabei nicht auf zwei beschränkt, sondern kann, wie bei der Reihenschaltung, drei und mehr betragen.

Fig.6 zeigt einen stufenförmigen Übergang zwischen einem zylindrischen Abschnitt 1 mit kleinerem Durchmesser $d_1$ und zylindrischen Abschnitten 3 mit größerem Durchmesser $d_3$, wobei der stufenförmige Übergang einen ersten, dem Abschnitt 1 nächstliegenden konischen Abschnitt 2, einen zylindrischen Abschnitt 2' mit mittleren Durchmesser und einen weiteren konischen Abschnitt 2'' aufweist.

**Patentansprüche**

1.  Anordnung zum Erwärmen von Stäben und Draht im Durchlauf durch Induktionsspulen, wobei die Stäbe und der Draht aus bikonischen Sequenzen der Länge L bestehen, wobei eine bikonische Sequenz einen zentralen, zylindrischen Abschnitt aufweist, an den sich beidseitig ein oder mehrere gleichartige oder ungleichartige konische oder anders geformte Übergänge anschließen, die sich in abschließenden zylindrischen Abschnitten fortsetzen, und die zylindrischen Abschnitte unterschiedliche Durchmesser aufweisen, **dadurch gekennzeichnet,** daß zwei Induktionsspulen (5) im Abstand L, der der Länge einer bikonischen Sequenz (4) entspricht, hintereinander angeordnet und von einer gemeinsamen Stromquelle gespeist sind, und daß die Länge l der Induktionsspulen (5) gleich der Summe der Länge $l_1$ des zylindrischen Abschnittes (1) mit dem kleineren Durchmesser ($d_1$) und etwa der Hälfte der Länge $l_2$ des nächstliegenden, angrenzenden Überganges (2) ist.

$$l \approx l_1 + 1/2 \times l_2.$$

2.  Anordnung nach Anspruch 1, **dadurch gekennzeichnet,** daß mehr als zwei Induktionsspulen (5) hintereinander mit dem Abstand L angeordnet sind.

3.  Anordnung nach Anspruch 1, oder 2, **dadurch gekennzeichnet,** daß die Induktionsspulen (5) elektrisch in Reihe geschaltet sind und ein Generator (6) zum Speisen der Induktionsspulen (5) vorgesehen ist.

4.  Anordnung nach Anspruch 1, 2 oder 3, **dadurch gekennzeichnet,** daß die Induktionsspulen (5) elektrisch parallel geschaltet sind und ein Generator (6) zum Speisen der Induktionsspulen (5) vorgesehen ist.

5.  Anordnung nach einem oder mehreren der vorgenannten Ansprüche, **dadurch gekennzeichnet**, daß zur Ansteuerung des Generators (6) ein Rechner (7) vorgesehen ist, der die Generatorleistung W in Abhängigkeit von dem in den Induktionsspulen (5) befindlichen Stab- oder Drahtdurchmesser d und der Durchlaufgeschwindigkeit v steuert.

6.  Anordnung nach Anspruch 1 bis 5, **dadurch gekennzeichnet**, daß zur Ansteuerung des Generators (6) ein Rechner (7) vorgesehen ist, der die Generatorleistung W in Abhängigkeit von der Einzugslänge x und der Durchlaufgeschwindigkeit v steuert.

7.  Anordnung nach Anspruch 1, **dadurch gekennzeichnet,** daß eine bikonische Sequenz einen zentralen, zylindrischen Abschnitt (3) mit einem größeren Durchmesser $d_3$ aufweist, an den sich nach beiden Seiten etwa konisch geformte Übergänge (2) anschließen, die sich in zylindrischen Abschnitten (1) mit gleichem Durchmesser $d_1$, der kleiner ist als der Durchmesser $d_3$ des zentralen Abschnittes (3), fortsetzen.

8.  Anordnung nach Anspruch 7, **dadurch gekennzeichnet,** daß der Übergang vom Abschnitt (3) mit dem größeren Durchmesser $d_3$ zum Abschnitt (1) mit dem Durchmesser $d_1$ in mehreren Stufen vorgesehen ist.

**Claims**

1.  An arrangement for heating rods or wire passing through induction coils, said rods or wire consisting of biconical sequences of length L and each biconical sequence featuring a central cylindrical section to each end of which one or more similar or dissimilar conical or other-shaped transition pieces join on, the latter in turn joining on to distal cylindrical sections which are of different diameter, **characterized in that** two induction coils (5) are provided, being positioned one behind the other at a distance L which corresponds to the length of one biconical sequence (4), and being energized by a common current source, and that the length l of the induction coils (5) is equal to the sum of the length $l_1$ of the cylindrical section (1) of smaller diameter $d_1$ and about half the length $l_2$ of the adjacent transition piece (2):

$$l \approx l_1 + 1/2 \times l_2.$$

2. The arrangement of claim 1, **characterized in that** more than two induction coils (5) are positioned one behind the other at a distance L.

3. The arrangement of claim 1 or 2, **characterized in that** the induction coils (5) are connected up electrically in series and a generator (6) is provided to energize the induction coils (5).

4. The arrangement of claim 1, 2 or 3, **characterized in that** the induction coils (5) are connected up electrically in parallel and a generator (6) is provided to energize the induction coils (5).

5. An arrangement according to one or more of the preceding claims, **characterized in that** a computer (7) is provided to control the generator (6), said computer controlling the generator output W as a function of the diameter d of the rod or wire within the induction coils (5) and of the speed v at which the rod or wire is passing through them.

6. An arrangement according to claims 1 to 5, **characterized in that** a computer (7) is provided to control the generator (6), said computer controlling the generator output W as a function of the length x of rod or wire within the induction coils and of the speed v at which the rod or wire is passing through them.

7. The arrangement of claim 1, **characterized in that** a biconical sequence has a central cylindrical section (3) with a larger diameter $d_3$, to each end of which approximately conical transition pieces (2) join on, the latter in turn joining on to cylindrical sections (1) which are of the same diameter $d_1$, with $d_1$ being smaller than the diameter $d_3$ of the central section (3).

8. The arrangement of claim 7, **characterized in that** the transition from section (3) with the larger diameter $d_3$ to section (1) with the diameter $d_1$ comprises a plurality of stages.

**Revendications**

1. Dispositif pour le chauffage de tiges et de fils passant au travers de bobines d'induction, les tiges et les fils étant composés de séquences bi-coniques de longueur L, une séquence bi-conique présentant un segment central cylindrique, auquel sont rattachées des deux côtés une ou plusieurs parties de jonction similaires ou nonsimilaires, coniques ou d'une autre forme, se prolongeant en des segments cylindriques adjacents, les segments cylindriques présentant des diamètres différents, **caractérisé en ce que** deux bobines d'induction (5) sont positionnées l'une derrière l'autre à une distance L correspondant à la longueur d'une séquence bi-conique (4), et sont alimentées par une même source de courant, et en ce que la longueur des bobines d'induction (5) est égale à la somme de la longueur $l_1$ du segment cylindrique (1) ayant le plus petit diamètre ($d_1$) et d'environ la moitié de la longueur $l_2$ de la partie de jonction (2) adjacente la plus proche.

$$l \approx l_1 + \tfrac{1}{2} \times l_2$$

2. Dispositif selon la revendication 1, **caractérisé en ce que** plus de deux bobines d'induction (5) sont positionnées les unes derrière les autres à la distance L.

3. Dispositif selon la revendication 1 ou 2, **caractérisé en ce que** les bobines d'inductions (5) sont branchées électriquement en série et un générateur (6) est prévu pour l'alimentation des bobines d'induction (5).

4. Dispositif selon la revendication 1, 2 ou 3, **caractérisé en ce que** les bobines d'induction (5) sont branchées électriquement en parallèle et un générateur (6) est prévu pour l'alimentation des bobines d'induction (5).

5. Dispositif selon l'une ou plusieurs des revendications précédentes, **caractérisé en ce qu'**il est prévu pour le contrôle du générateur (6) un ordinateur (7) qui contrôle la puissance W du générateur en fonction du diamètre d de la tige ou du fils situé à l'intérieur des bobines d'induction (5) et de la vitesse de défilement v.

6. Dispositif selon l'une des revendications 1 à 5, **caractérisé en ce qu'**il est prévu pour le contrôle du générateur (6) un ordinateur (7) qui contrôle la puissance W du générateur en fonction de la longueur introduite x et de la vitesse de défilement v.

7. Dispositif selon la revendication 1, **caractérisé en ce qu'**une séquence bi-conique présente un segment central cylindrique (3) ayant un plus grand diamètre $d_3$, auquel sont rattachées des deux côtés des parties de jonction (2) d'une forme approximativement conique se prolongeant en segments (1) cylindriques de diamètre identique $d_1$ inférieur au diamètre $d_3$ du segment central (3).

8. Dispositif selon la revendication 7, **caractérisé en ce que** la partie de jonction reliant le segment (3) de plus grand diamètre $d_3$ au segment (1) de diamètre $d_1$ est prévue en plusieurs marches.

# Fig.1

Fig. 2

Fig. 3

Fig. 4

Fig. 5

Fig. 6